# EUROPÄISCHE PATENTANMELDUNG

(11) **EP 3 670 280 A1**
(43) Veröffentlichungstag der Anmeldung: **24.06.2020**
(21) Anmeldenummer: 19212023.6
(22) Anmeldetag: 28.11.2019
(51) Int. Cl.: B60W 10/04, B60W 10/184, B60W 10/20, B60W 30/16, B60W 30/18, B60W 50/00, B60W 50/14, B60W 60/00

(54) **VERFAHREN UND ASSISTENZSYSTEM ZUR VORBEREITUNG UND/ODER DURCHFÜHRUNG EINES SPURWECHSELS**

(30) Priorität: 17.12.2018 DE 102018221860
(71) Anmelder: Volkswagen AG, 38440 Wolfsburg (DE)
(72) Erfinder: Eigel, Thomas, 13585 Berlin (DE); Kallmeyer, Felix, 38448 Wolfsburg (DE)

(57) **Zusammenfassung**

Die vorliegende Erfindung betrifft ein Verfahren zur automatisierten Vorbereitung und/oder Durchführung eines möglichen Spurwechsels mit einem Egofahrzeug im fließenden Verkehr von einer ersten Spur auf eine zweite Spur einer mehrspurigen Straße mittels eines Fahrassistenzsystems und ein Fahrassistenzsystem zur Durchführung des Verfahrens.

Um ein Verfahren und ein Fahrassistenzsystem vorzuschlagen, mit dem sich die Fahrsicherheit und der Fahrkomfort auf mehrspurigen Straßen weiter erhöht, wird vorgeschlagen, dass das Fahrassistenzsystem auf benachbarten Spuren der ersten Spur Lücken zwischen zwei hintereinander fahrenden Fahrzeugen und die relativen Positionen und Bewegungen der Lücken zum Egofahrzeug detektiert, die einen potenziellen Spurwechsel des Egofahrzeugs ermöglichen. Das Fahrassistenzsystem stellt den Folgeabstand und/oder die Folgegeschwindigkeit des Egofahrzeugs zum vorausfahrenden Fahrzeug derart ein, dass ein Spurwechsel und ein Einfädeln in eine Lücke auf einer benachbarten Spur durch eine Querführung des Egofahrzeugs möglich ist. Das Fahrassistenzsystem besitzt hierzu eine Sensoreinheit, mit der der Folgeabstand und die Folgegeschwindigkeit zum vorausfahrenden Fahrzeug überwachbar und Lücken zwischen zwei nachfolgenden Fahrzeugen auf benachbarten Fahrspuren der mehrspurigen Straße detektierbar sind.

## Beschreibung

Die vorliegende Erfindung betrifft ein Verfahren zur automatisierten Vorbereitung und/oder Durchführung eines möglichen Spurwechsels mit einem Egofahrzeug im fließenden Verkehr von einer ersten Spur auf eine zweite Spur einer mehrspurigen Straße mittels eines Fahrassistenzsystems.

Ferner betrifft die Erfindung ein Fahrassistenzsystem zur Durchführung des Verfahrens.

Aus dem Stand der Technik sind diverse Fahrassistenzsysteme bekannt, die aktiv in die Fahrzeugführung eingreifen und insbesondere in kritischen Situationen den Fahrer unterstützen. Neben einem Sicherheitsgewinn resultiert aus bekannten Fahrassistenzsystemen auch ein erhöhter Komfort, weil die Fahrzeugführung ein geringeres Maß an Aufmerksamkeit des Fahrers erfordert.

Es sind beispielsweise Fahrassistenzsysteme bekannt, die im dichten Verkehr einen konstanten Abstand (zeitlich und/oder räumlich) zu einem vorausfahrenden Fahrzeug einhalten, so dass der Fahrer im stockenden Verkehr Bremsvorgänge und anschließende Beschleunigungsvorgänge nicht selbst durchführen muss. Sofern bei solchen Fahrassistenzsystemen ein Spurwechsel eingeleitet wird, wird der eingestellte und vorgegebene Folgeabstand auf das vorausfahrende Fahrzeug temporär verringert, so dass ein Beschleunigungsvorgang auf der aktuellen Fahrspur möglich ist, um mit einer erhöhten (oder ggf. verringerten) Differenzgeschwindigkeit auf die andere Spur zu wechseln und dort in den fließenden Verkehr einzufädeln.

Ein weiteres Fahrassistenzsystem ist ferner aus DE 10 2007 031 420 A1 bekannt, das ebenfalls die Längsführung eines Fahrzeugs betrifft und wonach eine situationsangepasste Abstandsregelung eingestellt wird.

Weitere Fahrassistenzsysteme offenbaren DE 10 2005 017 560 A1 und US 2009/0271084 A1. Von bekannten Fahrassistenzsystemen ausgehend ist es die Aufgabe der vorliegenden Erfindung, ein Verfahren und ein Fahrassistenzsystem zur Durchführung des Verfahrens vorzuschlagen, mit dem sich die Fahrsicherheit und der Fahrkomfort auf mehrspurigen Straßen weiter erhöht.

Diese Aufgabe wird durch das Verfahren nach Anspruch 1 gelöst. Erfindungsgemäß ist vorgesehen, dass das Fahrassistenzsystem auf benachbarten Spuren der ersten Spur Lücken zwischen zwei hintereinander fahrenden Fahrzeugen und die relativen Positionen und Bewegungen der Lücken zum Egofahrzeug detektiert, die einen potenziellen Spurwechsel des Egofahrzeugs ermöglichen. Das Fahrassistenzsystem stellt ferner den Folgeabstand und/oder die Folgegeschwindigkeit des Egofahrzeugs zum vorausfahrenden Fahrzeug derart ein, dass ein Spurwechsel und ein Einfädeln in eine Lücke auf einer benachbarten Spur durch eine Querführung des Egofahrzeugs möglich ist.

Ferner wird die Aufgabe durch das Fahrassistenzsystem zur Durchführung des Verfahrens nach Anspruch 7 gelöst, dass eine Sensoreinheit besitzt, mit der der Folgeabstand und die Folgegeschwindigkeit zum vorausfahrenden Fahrzeug überwachbar und Lücken zwischen zwei nachfolgenden Fahrzeugen auf benachbarten Fahrspuren der mehrspurigen Straße detektierbar sind.

Die vorliegende Erfindung zielt daher auf ein Verfahren und ein Fahrassistenzsystem zur Durchführung des Verfahrens ab, das insbesondere in besonders dichtem Verkehr einen Spurwechsel vereinfacht, indem der Folgeabstand und die Folgegeschwindigkeit zum vorausfahrenden Fahrzeug derart variabel eingestellt wird, dass das Egofahrzeug unmittelbar neben einer Lücke auf einer benachbarten Spur fährt, in die das Egofahrzeug automatisch oder manuell gesteuert durch eine Querführung einfädeln kann. Hierdurch muss der Fahrer bei einem gewünschten oder erforderlichen Spurwechsel den Folgeabstand und die Folgegeschwindigkeit nicht selbst auf den Verkehr auf der benachbarten Spur anpassen und sich gleichzeitig im rückwärtigen Verkehr nach geeigneten Lücken zum Einfädeln umsehen. Hierdurch wird nicht nur die Fahrsicherheit beim Spurwechsel sondern auch der Fahrkomfort deutlich erhöht.

Bevorzugte Ausführungsformen der vorliegenden Erfindung werden nachfolgend und in den Unteransprüchen beschrieben.

Nach einer ersten bevorzugten Ausgestaltung der Erfindung ist vorgesehen, dass das Fahrassistenzsystem mittels einer Signaleinrichtung einen optionalen Fahrspurwechsel signalisiert, wenn eine ausreichend große Lücke im fließenden Verkehr auf einer benachbarten Spur detektiert wird und ein Spurwechsel und ein Einfädeln in die Lücke durch eine Querführung des Egofahrzeugs möglich ist. Ein geeignetes Signal kann beispielsweise in Form eines Signaltons oder einer Ansage "Fahrspurwechsel nach links (oder rechts) möglich" erfolgen. Es sind auch Lichtsignale vorgesehen, die mit einem entsprechenden Zeichen die Option eines Spurwechsel darstellen.

Bei der Suche nach etwaigen Lücken, in die das Egofahrzeug auf benachbarten Spuren einfädeln kann, ist vorzugsweise vorgesehen, dass das Egofahrzeug einen minimalen Folgeabstand d₁ zum vorausfahrenden Fahrzeug nicht unterschreitet und/oder einen maximalen Folgeabstand d₂ zum vorausfahrenden Fahrzeug nicht überschreitet. Hiermit wird zunächst vermieden, dass das Egofahrzeug zu dicht auf den vorausliegenden Verkehr auffährt und/oder selbst eine zu große Lücke schafft, die einen stockenden Verkehr bewirken würde. Dabei wird der minimale Folgeabstand d₁ zum vorausfahrenden Fahrzeug geschwindigkeitsabhängig und der maximale Folgeabstand d₂ zum vorausfahrenden Fahrzeug geschwindigkeitsabhängig oder vorgebbar gewählt.

Um bei einem unerwünschten Spurwechsel im fließenden Verkehr ein sich wiederholendes Beschleunigen und Bremsen bei der Ausrichtung nach Lücken auf benachbarten Spuren zum Einfädeln zu vermeiden, ist nach einer bevorzugten Ausgestaltung der Erfindung vorgesehen, dass das Verfahren bzw. die damit verknüpfte Funktion innerhalb des Fahrassistenzsystems durch den Fahrer und/oder automatisch aktivierbar und deaktivierbar ist. Hierdurch kann bei einem nicht gewünschten Spurwechsel der Abstand zum vorausfahrenden Fahrzeug konstant gehalten werden, was neben einem hohen Fahrkomfort auch eine verbesserte Energieeffizienz liefert.

Unabhängig hiervon ist vorzugsweise eine automatische Aktivierung des Verfahrens vorgesehen, wenn die Auswertung von prädiktiven Streckendaten und/oder Schwarmdaten von anderen Fahrzeugen in der näheren Umgebung durch eine Auswerteeinheit eine vorausliegende Verkehrssituation mit einem obligatorischen Spurwechsel ergibt. Eine solche Verkehrssituation ergibt sich beispielsweise durch eine Fahrbahnverengung oder ein planmäßiges Abbiegen beispielsweise bei einer Ausfahrt. Die prädiktiven Streckendaten können sich dabei aus GPS-Daten der geplanten Route oder aus aktuellen Verkehrsmeldungen ergeben. Zur Auswertung von Schwarmdaten kann auf Daten zurückgegriffen werden, die sich beispielsweise aus der car2car-Kommunikation ergeben. In einem solchen Fall, wie er beispielsweise in der Situation auftritt, bei der eine Spur einer mehrspurigen Straße blockiert ist oder endet, ordnet sich das Egofahrzeug automatisch derart im fließenden Verkehr an, dass auf der benachbarten Spur eine Lücke positioniert ist, in die das Egofahrzeug durch eine Querführung einfädeln kann. Weisen mehrere Fahrzeuge ein solches Fahrassistenzsystem auf, das zur Durchführung des vorliegenden Verfahrens eingerichtet ist, ist hierdurch ein automatischer Reißverschlussverkehr möglich, was die übliche Staubildung vor einer Fahrbahnverengung deutlich reduziert, weil Abstimmungsprozesse zwischen den Fahrern und der übliche Kampf um vordere Positionen ausbleibt.

Eine konkrete Ausführungsform der vorliegenden Erfindung wird nachfolgend anhand der Figuren erläutert. Es zeigen :
Fig. 1,2 Fahrsituationen auf einer mehrspurigen Straße zeigen und
Fig. 3 ein Egofahrzeug mit einem Fahrassistenssystem.

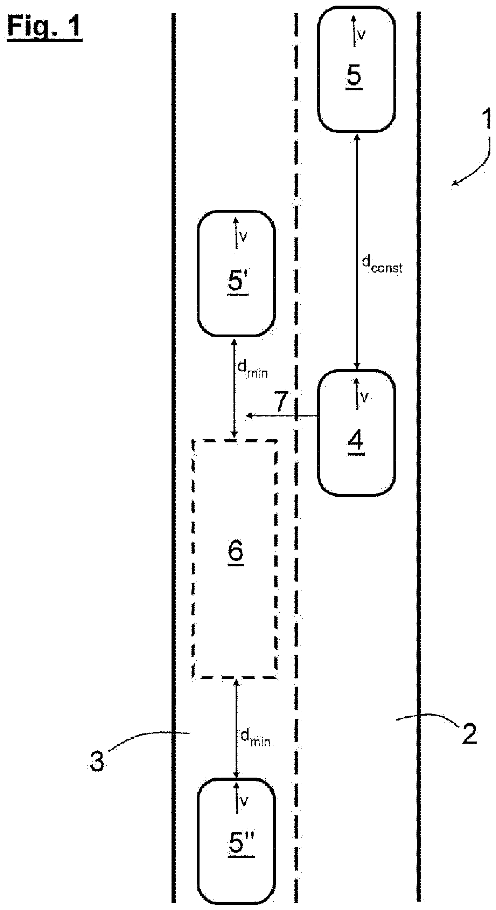

Fig. 1 zeigt eine herkömmliche Fahrsituation auf einer zweispurigen Straße 1 mit einer rechten Spur 2 und einer linken Spur 3, bei der das Egofahrzeug 4 mit einem Fahrassistenzsystem im konstanten Folgeabstand d_{const} hinter einem vorausfahrenden Fahrzeug 5 fährt. Auf der linken Spur 3 fahren ebenfalls zwei Fahrzeuge 5', 5", zwischen denen eine Lücke 6 ist, in die das Egofahrzeug 4 von der rechten Spur 2 einfädeln könnte, ohne dabei einen Sicherheitsabstand dₘᵢₙ zu den Fahrzeugen 5', 5" zu unterschreiten. Alle Fahrzeuge 4, 5, 5', 5" fahren in der vorliegenden Verkehrssituation mit der gleichen Geschwindigkeit v. In der dargestellten Situation ist ein Spurwechsel durch das Egofahrzeug 4 nicht durch eine reine Querführung des Fahrzeugs 4 in Pfeilrichtung 7 möglich, weil dann ein Sicherheitsabstand dₘᵢₙ zum vorausfahrenden Fahrzeug 5' auf der linken Spur 3 unterschritten wäre. Das Egofahrzeug 4 muss daher bei einem gewünschten Spurwechsel aktiv abgebremst und anschließend wieder beschleunigt werden, um das Egofahrzeug 4 für einen Spurwechsel neben der Lücke 6 zu positionieren.

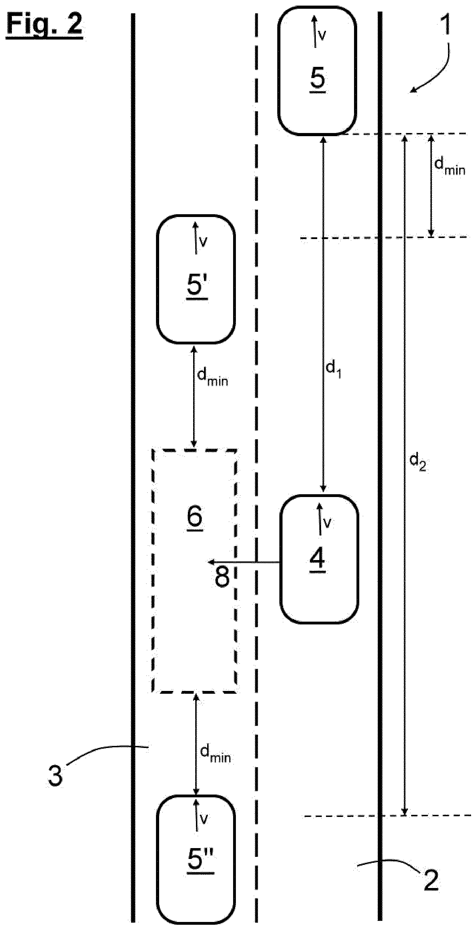

Fig. 2 zeigt die gleiche Situation, bei der das Egofahrzeug 4 allerdings ein Fahrassistenzsystem der erfindungsgemäßen Art besitzt. Das Fahrassistenzsystem erkennt automatisch die vorhandene Lücke 6 auf der linken Spur 3 und kann die eigene relative Position und Geschwindigkeit in gewissen Grenzen so anpassen, dass das Egofahrzeug 4 unmittelbar neben der registrierten Lücke angeordnet ist. Dabei wird ein Sicherheitsabstand dₘᵢₙ zu vorausfahrenden Fahrzeug 5 nicht unterschritten und ein maximaler Folgeabstand d₂ nicht überschritten. In dieser Situation (wie in Fig. 2 dargestellt) kann bei Bedarf ein automatischer oder manueller Spurwechsel durch eine Querführung des Egofahrzeugs 4 in Pfeilrichtung 8 erfolgen.

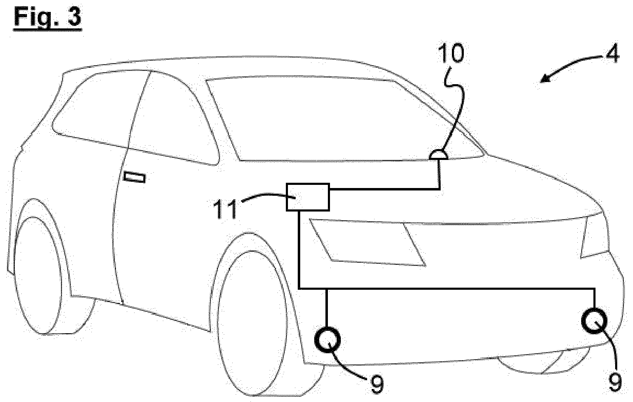

Fig. 3 zeigt beispielhaft ein Egofahrzeug 4 mit einem Fahrassistenzsystem, das eingerichtet ist, um das erfindungsgemäße Verfahren durchzuführen. Hierzu besitzt das Egofahrzeug 4 eine Sensoreinheit 9 mit der neben dem Folgeabstand d₁ zum vorausfahrenden Fahrzeug 5 auch der Verkehr auf benachbarten Spuren 2, 3 dahingehend überwacht wird, dass etwaige Lücken 6 zwischen zwei Fahrzeugen 5', 5 für einen potentiellen Spurwechsel detektiert werden. Um einen potentiellen Spurwechsel anzuzeigen besitzt das Egofahrzeug 4 eine Signaleinrichtung 10, die im dargestellten Ausführungsbeilspiel als Lichtzeichen ausgebildet ist und das eine potentiellen Spurwechsel grün und eine blockierte Spur rot darstellt. Zur Steuerung des Verfahren und zur Auswertung von Schwarmdaten oder andere prädiktiven Streckendaten besitzt das Egofahrzeug 4 eine Auswerteeinheit 11, die mit der Signaleinrichtung 10 und der Sensoreinheit 9 verbunden ist.

### Bezugszeichenliste

- 1: zweispurige Straße
- 2: rechte Spur
- 3: linke Spur
- 4: Egofahrzeug
- 5, 5', 5": Fahrzeug
- 6: Lücke
- 7: Pfeilrichtung
- 8: Pfeilrichtung
- 9: Sensoreinheit
- 10: Signaleinrichtung
- 11: Auswerteeinheit

- d₁: Folgeabstand
- d₂: maximaler Folgeabstand
- d_{const}: konstanter Folgeabstand
- dₘᵢₙ: Sicherheitsabstand
- v: Geschwindigkeit

## Patentansprüche

1. Verfahren zur automatisierten Vorbereitung und/oder Durchführung eines möglichen Spurwechsels mit einem Egofahrzeug (4) im fließenden Verkehr von einer ersten Spur (2, 3) auf eine zweite Spur (3, 2) einer mehrspurigen Straße (1) mittels eines Fahrassistenzsystems,
**dadurch gekennzeichnet, dass**
das Fahrassistenzsystem
a) auf benachbarten Spuren der ersten Spur (2, 3) Lücken (6) zwischen zwei hintereinander fahrenden Fahrzeugen (5, 5') und die relativen Positionen und Bewegung der Lücken (6) zum Egofahrzeug (4) detektiert, die einen potenziellen Spurwechsel des Egofahrzeugs (4) ermöglichen und
b) den Folgeabstand (d₁) und/oder die Folgegeschwindigkeit des Egofahrzeugs (4) zum vorausfahrenden Fahrzeug (5') derart einstellt, dass ein Spurwechsel und ein Einfädeln in eine Lücke (6) auf einer benachbarten Spur (3, 2) durch eine Querführung des Egofahrzeugs (4) möglich ist.

2. Verfahren nach Anspruch 1, **dadurch gekennzeichnet, dass** das Fahrassistenzsystem mit einer Signaleinrichtung (10) einen optionalen Fahrspurwechsel signalisiert, wenn eine ausreichend große Lücke (6) im fließenden Verkehr auf einer benachbarten Spur (2, 3) detektiert wird und ein Spurwechsel und ein Einfädeln in die Lücke (6) durch eine Querführung des Egofahrzeugs (4) möglich ist.

3. Verfahren nach einem der Ansprüche 1 oder 2, **dadurch gekennzeichnet, dass** das Egofahrzeug (4) einen minimalen Folgeabstand (d₁) zum vorausfahrenden Fahrzeug (5) nicht unterschreitet und/oder einen maximalen Folgeabstand (d₂) zum vorausfahrenden Fahrzeug (5) nicht überschreitet.

4. Verfahren nach Anspruch 3, **dadurch gekennzeichnet, dass** der minimale Folgeabstand (d₁) zum vorausfahrenden Fahrzeug (5) geschwindigkeitsabhängig und der maximale Folgeabstand (d₂) zum vorausfahrenden Fahrzeug (5) geschwindigkeitsabhängig oder vorgebbar ist.

5. Verfahren nach einem der Ansprüche 1 bis 4, **dadurch gekennzeichnet, dass** das Verfahren durch den Fahrer und/oder automatisch aktivierbar und deaktivierbar ist.

6. Verfahren nach einem der Ansprüche 1 bis 5, **gekennzeichnet durch** eine automatische Aktivierung des Verfahrens, wenn die Auswertung von prädiktiven Streckendaten und/oder Schwarmdaten durch eine Auswerteeinheit (11) eine vorausliegende Verkehrssituation mit einem obligatorischen Spurwechsel ergibt.

7. Fahrassistenzsystem zur Durchführung des Verfahrens nach einem der Ansprüche 1 bis 6, **gekennzeichnet durch** eine Sensoreinheit (9), mit der der Folgeabstand (d₁) und die Folgegeschwindigkeit zum vorausfahrenden Fahrzeug (5) überwachbar und Lücken (6) zwischen zwei nachfolgenden Fahrzeugen (5', 5) auf benachbarten Spuren (2, 3) der mehrspurigen Straße (1) detektierbar sind.

8. Fahrassistenzsystem nach Anspruch 7 **gekennzeichnet durch** eine Signaleinrichtung (10), die einen optionalen Fahrspurwechsel signalisiert, wenn eine ausreichend große Lücke (6) im fließenden Verkehr auf einer benachbarten Spur (2, 3) detektiert wird und ein Spurwechsel und ein Einfädeln in die Lücke (6) durch eine Querführung des Egofahrzeugs (6) möglich ist.
